# EUROPEAN PATENT APPLICATION

(11) **EP 4 395 341 A1**
(43) Date of publication of application: **03.07.2024**
(21) Application number: 23864157.5
(22) Date of filing: 08.11.2023
(51) Int. Cl.: H04N 21/81

(54) **VIDEO PRODUCTION METHOD AND APPARATUS, DEVICE AND MEDIUM**

(30) Priority: 08.11.2022 CN 202211394194
(71) Applicant: Beijing Zitiao Network Technology Co., Ltd., Beijing 100190 (CN)
(72) Inventor: LI, Xinwei, Beijing 100028 (CN)
(74) Representative: Dentons UK and Middle East LLP
(86) International application number: PCT/CN2023/130519
(87) International publication number: WO 2024/099370

(57) **Abstract**

The disclosure relates to a method, apparatus, device and medium for producing video. The method includes: creating a video producing task for a user group comprising at least a first user and a second user, the video producing task being used for collecting a storyboard video material and/or editing the storyboard video material into a target video; in response to a first editing operation of the first user for the video producing task, displaying an editing result of the first editing operation on an editing interface of the video producing task, and recording the first editing operation in the video producing task; in response to the second editing operation of a second user for the video producing task, displaying an editing result of the second editing operation and recording the second editing operation in the video producing task; and generating a production result of the video producing task based on editing operations recorded in the video producing task. In embodiments of the present disclosure, a plurality of users collaboratively produce the video, which improves the efficiency of video producing.

## Description

This application claims a priority to the Chinese Patent Application No. 202211394194.9, entitled "METHOD, APPARATUS, DEVICE AND MEDIUM FOR PRODUCING VIDEO" filed on November 08, 2022, which is hereby incorporated by reference in its entirety.

### FIELD

The present disclosure relates to the field of computer applications, particularly to a method, apparatus, device and medium for producing video.

### BACKGROUND

With the development of computer technology, sharing and spreading information through videos has become the mainstream, such as promoting food in the form of videos.

However, with the diversification of video promotion scenarios, the demand for video producing is becoming more diverse. In order to meet the diverse needs of video producing, it is necessary to perform a plurality of editing operations on a video, so the duration of video producing is extended. Therefore, there is an urgent need for a way to improve the efficiency of video producing.

### SUMMARY

In order to solve the above technical problems or at least partially solve the above technical problems, the present disclosure provides a method, apparatus, device and medium for producing video, thereby enabling a plurality of users to perform video producing collaboratively, which improves the efficiency of video producing.

Embodiments of the present disclosure provide a video producing method which comprises: creating a video producing task for a user group comprising at least a first user and a second user, the video producing task being used for collecting a storyboard video material and/or editing the storyboard video material into a target video; in response to a first editing operation of the first user for the video producing task, displaying an editing result of the first editing operation on an editing interface of the video producing task, and recording the first editing operation in the video producing task; in the case that there is no conflict between the editing operation of the first user and the editing operation of the second user, in response to the second editing operation of a second user for the video producing task, displaying an editing result of the second editing operation on the editing interface of the video producing task, and recording the second editing operation in the video producing task; and generating a production result of the video producing task based on editing operations recorded in the video producing task.

The embodiments of the present disclosure also provide an apparatus for producing video. The apparatus comprises: a creating module configured for creating a video producing task for a user group including at least a first user and a second user, the video producing task for collecting a storyboard video material and/or editing the storyboard video material into a target video; a first display module configured for in response to a first editing operation of the first user for the video producing task, displaying an editing result of the first editing operation on an editing interface of the video producing task, and recording the first editing operation in the video producing task; a second display module configured for in the case that there is no conflict between the editing operation of the first user and the editing operation of the second user, in response to the second editing operation of a second user for the video producing task, displaying an editing result of the second editing operation on the editing interface of the video producing task, and recording the second editing operation in the video producing task; and a generating module configured for generating a production result of the video producing task based on editing operations recorded in the video producing task.

Embodiments of the present disclosure also provides an electronic device. The electronic device comprises: a processor; and a memory for storing the processor-executable instructions. The processor is configured to read the executable instructions from the memory, and execute the executable instructions to implement the method for producing video provided in embodiments of the present disclosure.

Embodiments of the present disclosure also provides a computer-readable storage medium having a computer program stored thereon. The computer program is used to perform the method for producing video provided in the embodiments of the present disclosure.

Embodiments of the present disclosure also provides a computer program product which, when instructions in the computer program product are executed by a processor, implements the method for producing video provided in the embodiments of the present disclosure.

Embodiments of the present disclosure have the following advantages over the Prior Art.

The video producing solution provided by the present disclosure creates a video producing task for a user group comprising at least a first user and a second user, the video producing task being used for collecting a storyboard video material and/or editing the storyboard video material into a target video. In response to a first editing operation of the first user for the video producing task, an editing result of the first editing operation is displayed on an editing interface of the video producing task, and recording the first editing operation in the video producing task. Furthermore, in the case that there is no conflict between the editing operation of the first user and the editing operation of the second user, in response to the second editing operation of a second user for the video producing task, an editing result of the second editing operation is displayed on the editing interface of the video producing task, and the second editing operation is recorded in the video producing task. Based on editing operations recorded in the video producing task, a production result of the video producing task is generated. In embodiments of the present disclosure, video producing is performed collaboratively by a plurality of users, which improves the efficiency of video producing.

### BRIEF DESCRIPTION OF THE DRAWINGS

In conjunction with the accompanying drawings and with reference to the following detailed description, the above and other features, advantages and aspects of the various embodiments of the present disclosure will become more apparent. Throughout the drawings, similar or same reference numerals denote similar or same elements. It should be understood that the drawings are illustrative and that the elements are not necessarily drawn to scale.
FIG. 1 is a schematic flow chart of a method for producing video provided by embodiments of the present disclosure;
FIG. 2 is a schematic flow chart of a further method for producing video provided by embodiments of the present disclosure;
FIG. 3A is a schematic diagram of a scenario for producing video provided by embodiments of the present disclosure;
FIG. 3B is a schematic diagram of a scenario for producing video provided by embodiments of the present disclosure;
FIG. 4 is a schematic flow chart of a further method for producing video provided by embodiments of the present disclosure;
FIG. 5 is a schematic diagram of a further scenario for producing video provided by embodiments of the present disclosure;
FIG. 6 is a schematic diagram of a further scenario for producing video provided by embodiments of the present disclosure;
FIG. 7 is a schematic diagram of a further scenario for producing video provided by embodiments of the present disclosure;
FIG. 8 is a schematic diagram of a further scenario for producing video provided by embodiments of the present disclosure;
FIG. 9 is a schematic structural diagram of an apparatus for producing video provided by embodiments of the present disclosure; and
FIG. 10 is a schematic structural diagram of an electronic device provided by embodiments of the present disclosure.

### DETAILED DESCRIPTION

The following will describe embodiments of the present disclosure in more detail with reference to the accompanying drawings. Although certain embodiments of the present disclosure are shown in the drawings, it should be understood that the present disclosure can be implemented in various forms and should not be construed as limited to the embodiments set forth herein. On the contrary, these embodiments are provided for a more thorough and complete understanding of the present disclosure. It should be understood that the drawings and embodiments of the present disclosure are for illustrative purposes only and are not intended to limit the scope of protection of the present disclosure.

It should be understood that the various steps described in the method implementation method of this disclosure can be executed in different orders and/or in parallel. In addition, the method implementation method can include additional steps and/or omit the steps shown. The scope of this disclosure is not limited in this regard.

The term "including" and its variations used herein are not exclusive, which means "including but not limited to". The term "based on" means "at least partially based on". The term "one embodiment" means "at least one embodiment"; the term "a further embodiment" means "at least one further embodiment"; and the term "some embodiments" means "at least some embodiments". Relevant definitions of other terms will be given in the following description.

It should be noted that the concepts of "first" and "second" mentioned in this disclosure are only used to distinguish different devices, modules, or units, and are not used to limit the order or interdependence of the functions performed by these devices, modules, or units.

It should be noted that the modifications of "one" and "a plurality of' mentioned in this disclosure are illustrative and not restrictive. Those skilled in the art should understand that unless otherwise specified in the context, they should be understood as "one or more".

The names of the messages or information exchanged between a plurality of devices in the present disclosure are for illustrative purposes only and are not intended to limit the scope of these messages or information.

In order to solve the above problems, embodiments of the present disclosure provides a method for producing video. In this method, a plurality of users can perform video producing collaboratively, which improves the efficiency of video producing.

The following specific embodiments in conjunction with the method will be introduced.

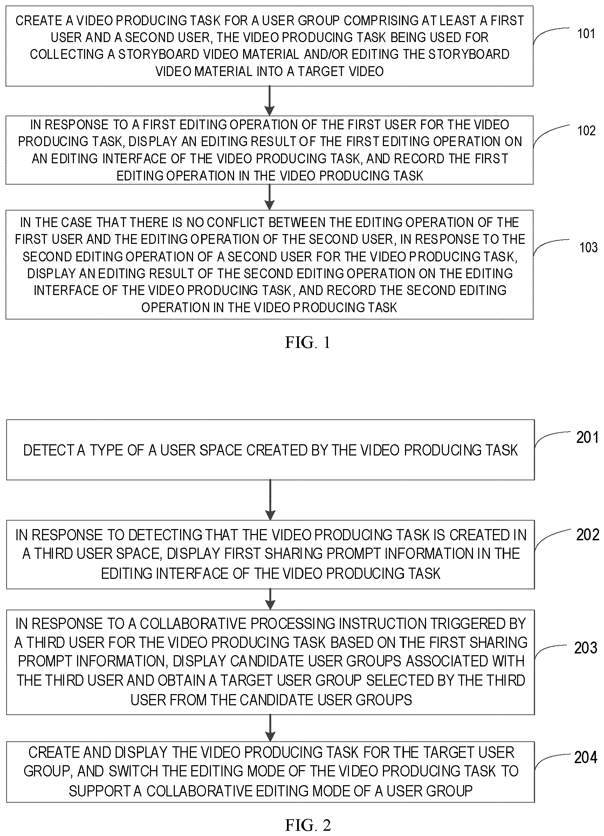

FIG. 1 is a schematic flow diagram of a video producing method provided by embodiments of the present disclosure, which can be performed by an apparatus for producing video, wherein the apparatus can be implemented in software and/or hardware, and generally, can be integrated into an electronic device. As shown in FIG. 1, the method includes:

Step 101, creating a video producing task for a user group comprising at least a first user and a second user, the video producing task being used for collecting a storyboard video material and/or editing the storyboard video material into a target video.

In an embodiment of the present disclosure, the user group is created in advance, wherein the user group includes at least a first user and a second user, i.e., the user group includes a plurality of users.

In one embodiment of the present disclosure, a video producing task is created for the user group, so that the first user and the second user in the user group can perform collaborative editing later. The video producing task is used for collecting storyboard video material and/or editing the storyboard video material into a target video. A complete video can be split into a plurality of storyboard shots, and a visual material corresponding to each storyboard shot may be considered as a storyboard video material.

It will be appreciated that, in embodiments of the present disclosure, the video producing task is divided into two stages, the first stage is a collection stage of the storyboard video material, the second stage is an editing stage in which the storyboard video material is edited into the target video. Both of these stages may involve collaborative processing of a plurality of users in the user group.

Step 102, in response to a first editing operation of the first user for the video producing task, displaying an editing result of the first editing operation on an editing interface of the video producing task, and recording the first editing operation in the video producing task.

In one embodiment of the present disclosure, in response to a first editing operation of a first user for the video producing task, the editing result of the first editing operation is displayed on an editing interface of the video producing task, and the first editing operation is recorded in the video producing task. The first editing operation includes an operation of collecting a storyboard video material and/or an operation of editing the storyboard video material into a target video.

Step 103, in the case that there is no conflict between the editing operation of the first user and the editing operation of the second user, in response to the second editing operation of a second user for the video producing task, displaying an editing result of the second editing operation on the editing interface of the video producing task, and recording the second editing operation in the video producing task.

In one embodiment of the present disclosure, in response to a second user editing operation for the second video producing task, the editing result of the second editing operation is displayed on the editing interface of the video producing task, and the second editing operation is recorded in the video producing task, whereby the second editing operation comprises an operation of a storyboard video material and/or an operation of editing the storyboard video material into the target video.

In order to ensure that the collaborative editing does not conflict, it is necessary to set the rules for collaborative editing between the first user and the second user in advance to ensure that there is no conflict between the editing operations of the first user and the second user.

It should be noted that in different application scenarios, the ways to determine there is no conflict between the editing operations of the first user and the second user are different. An example is as follows.

In some possible embodiments, the editing mode is set to a serial editing mode. In this embodiment, collaborative editing operations for the same video producing task need to be executed in sequence. The editing permission of the video producing task may only be occupied by a single user at a time. The first editing operation is performed in the case that the first user is granted the editing permission of the video producing task. The second editing operation is performed in the case that the second user is granted the editing permission of the video producing task. The editing permission of the second user is granted after the editing permission of the first user is released.

In the embodiment of the present disclosure, in response to a first editing permission request from the first user, the first user is authorized to perform a first editing operation on the video producing task, and after the first user completes the first editing operation and releases the editing permission, the second user is authorized to perform a second editing operation on the video producing task in response to a second editing permission request from the second user.

In the embodiment of the present disclosure, when the first user and the second user is in the release state of an editing permission, i.e., in the absence of the editing permission, the corresponding editing control may be in an inactive state. For example, the editing control is displayed in grey, to remind the corresponding user that it is not editable for now. Alternatively, the reminder may be provided in the form of text "** user is editing. Please pause editing and wait." and so on.

It should be noted that the conditions for releasing an editing permission discussed above may be that the first user has completed the corresponding editing operation and closed the editing page, or that the first user has not performed the corresponding editing operation after detecting that the preset time has exceeded, or that the first user has performed a predefined illegal editing operation. In order to further improve the user's editing experience, when the corresponding user releases the editing permission, a reminder operation may be performed, such as displaying the text "Your editing permission has been released now " .

In some possible embodiments, the editing mode is set to a parallel editing mode in which a plurality of users may perform editing operations at the same time. In this embodiment, the editing permission of the video producing task is allowed to be occupied by a plurality of users at the same time, and the first editing operation and the second editing operation are performed in parallel when the first user and the second user are simultaneously granted the editing permission of the video producing task the first editing operation is used for triggering an editing processing of a first material object in the video producing task; during the performing of the first editing operation, an editing state of the first material object is set to a locked state, so that the first material object cannot be triggered by a further operation other than the first editing operation; and the second editing operation is used for triggering an editing processing of a second material object in the video producing task; during the performing of the second editing operation, an editing state of the second material object is set to a locked state, so that the second material object cannot be triggered by a further operation other than the second editing operation. That is, in this embodiment, in response to a first editing permission request for the first material object in the video producing task applied by the first user, wherein the first material object may be any object unit that is editable in the video producing task, for example, a storyboard video material, description information about the video content of a storyboard video material, etc.. After obtaining the first editing permission request for the first material object from the first user, the first user is authorized to perform a first editing operation on the first material object, and the editing state of the first material object is set to a locked state, whereby when the first material object is in the locked state, other users cannot perform editing operations on the first material object. When the first user finishes editing, the first material object is in an unlocked state, and other users may edit the first material object. In some possible implementations, in order to ensure that other users cannot perform editing operations on the first material object, when the first material object is in a locked state, the editing control corresponding to the first material object may be set to an inactive state on the editing pages of other users, and so on. Furthermore, in order to further improve the user operation experience, the first material object which is being edited by the first user may be prompted, for example, in the form of text "The current first material object is being edited by the first user, please wait", and so on.

In this embodiment, in the case where the first material object is in a locked state, the second user is prohibited from authorizing editing the first material object, and the second user may be authorized to perform a second editing operation on the second material object which is not set in a locked state.

That is, in this embodiment, a single first material object may be edited by only one user exclusively at a time, but different material objects may be simultaneously edited by different users in parallel. In this way, the efficiency of video editing is further improved.

Step 104, generating a production result of the video producing task based on editing operations recorded in the video producing task.

In one embodiment of the present disclosure, a production result of the video producing task is generated based on the editing operation recorded in the video producing task. The production result of the video producing task may correspond to the result of collecting a storyboard video material, or may correspond to the result of editing the storyboard video material into a target video, whereby the production result is obtained by collaborative editing of the first user and the second user. Therefore, in some scenarios, a plurality of users playing different roles may edit the respective parts of the video producing task, thereby improving the production efficiency of the video producing task.

In summary, in the method for producing video according to embodiments of the present disclosure, a video producing task is created for a user group comprising at least a first user and a second user, the video producing task being used for collecting a storyboard video material and/or editing the storyboard video material into a target video. In response to a first editing operation of the first user for the video producing task, an editing result of the first editing operation on an editing interface of the video producing task is displayed and the first editing operation in the video producing task is recorded. In the case that there is no conflict between the editing operation of the first user and the editing operation of the second user, in response to the second editing operation of a second user for the video producing task, an editing result of the second editing operation on the editing interface of the video producing task is displayed, and the second editing operation in the video producing task is recorded. A production result of the video producing task is generated based on editing operations recorded in the video producing task. In embodiments of the present disclosure, a plurality of users collaboratively produce the video, which improves the efficiency of video producing.

In the following, concrete embodiments are used to illustrate how to create a video producing task for a user group.

In some possible embodiments, as shown in FIG. 2, a video producing task is created for a user group, including:
Step 201, detecting a type of a user space created by the video producing task.

In one embodiment of the present disclosure, the type of the user space created by the video producing task is detected, for facilitating collaboratively editing the video producing task based on the type of the user space, whereby the type of the user space may be identified based on the type of an entry of a production task and the like.

Step 202, in response to detecting that the video producing task is created in a third user space, displaying first sharing prompt information in the editing interface of the video producing task.

In one embodiment of the present disclosure, in response to detecting that the video producing task is created in a third user space, first sharing prompt information is displayed in the editing interface of the video producing task. The third user space is a storage space visible to the third user, the video producing task in the third user space may be displayed in the form of a thumbnail, and the corresponding video producing task may be initiated by triggering the corresponding thumbnail. The video producing task in the personal space is only visible to the third user. In addition, the first shared prompt information may be a preset sharing control or sharing reminder information displayed in a prompt box of a style such as a bubble, for example, a prompt bubble displaying "whether to share with others".

Step 203, in response to a collaborative processing instruction triggered by a third user for the video producing task based on the first sharing prompt information, displaying candidate user groups associated with the third user and obtaining a target user group selected by the third user from the candidate user groups.

In the embodiment of the present disclosure, in response to a collaborative processing instruction triggered by a third user for the video producing task based on the first sharing prompt information (for example, the collaborative processing instruction is obtained in response to detecting that the third user triggers a preset collaborative processing control, and so on), the candidate user group associated with the third user is displayed, whereby the candidate user group is a preset group including the third user. In some possible embodiments, candidate user groups associated with the third user and candidate user(s) included in each of the candidate user groups may be reviewed at the home page of the third user.

After the candidate user groups associated with the third user are displayed, a target user group selected by the third user is obtained from the candidate user groups. In some possible embodiments, the selected control may be displayed for each of the candidate user groups, and a selection of the target user group may be achieved by triggering the selected control. In some possible embodiments, a group in the candidate user groups may be, as a whole, selected as the target user group. In some possible embodiments, several users in a group in the candidate user groups may be selected as the target user group.

Step 204, creating and displaying the video producing task for the target user group, and switching the editing mode of the video producing task to support a collaborative editing mode of a user group.

In embodiments of the present disclosure, the video producing task is created and displayed for the target user group, and the editing mode of the video producing task is switched to support a collaborative editing mode of a user group, thereby achieving collaborative editing of a plurality of users.

In some possible embodiments, when a user initiate a corresponding video producing task, the user identity may be verified. Only if it is verified that the user belongs to the target user group, the corresponding production task may be initiated. Otherwise, a prompt of a failure of the verification is provided to the user, and a prompt message that an application permission of a fourth user may be created for the video producing task is displayed. Alternatively, after sharing with the target user group, password information may be sent to the users in the target user group, and the users in the target user group may enter the video producing task according to the password information.

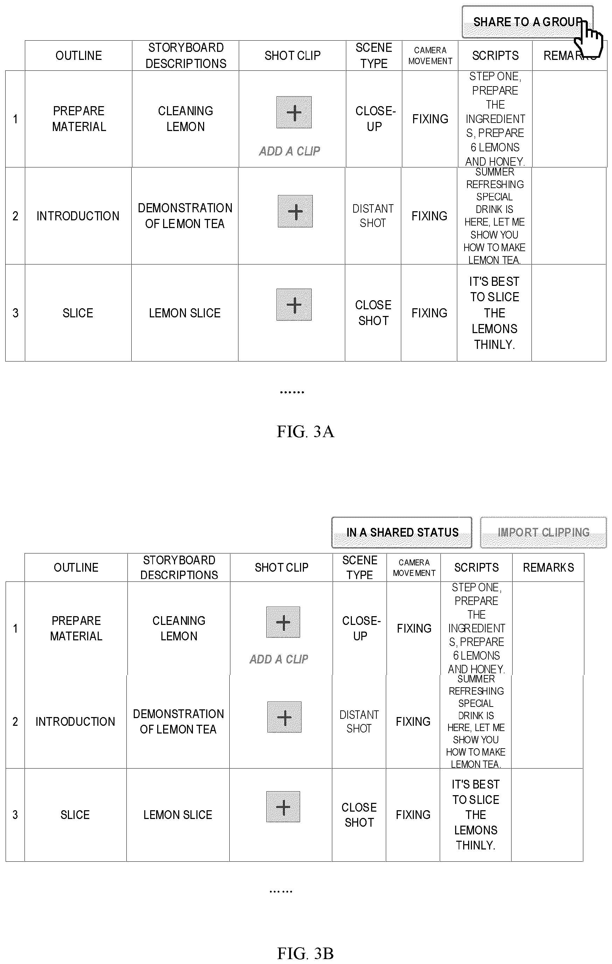

For example, as shown in FIG. 3A, if the video producing task is to collect a storyboard video material, and the page for collecting the storyboard video material is a table editing page, the table editing page includes a "share to group" control. If a user triggers the control, the video producing task will be created for the target user group, and the editing mode of the video producing task will be switched to the collaborative editing mode that supports the user group. In the collaborative editing mode, a plurality of users in the target user group are capable of collaboratively editing respective video producing tasks.

Furthermore, in one embodiment of the present disclosure, the task sharing completion information is displayed to the third user. For example, the task sharing complete message may be in any style such as pop-up window style, bubble style, etc., and the group entrance corresponding to the target user group is displayed. In response to the triggering operation of the third user on the group entrance, the third user space is switched to a space for the target user group, and the video producing task is displayed in the space for the target user group, where the video producing task displays a shared status identifier. The style of the shared status identifier may be set according to requirements of a scenario, which will not be detailed here. For example, as shown in FIG. 3B, the shared status identifier may be a control mode displayed in the upper right corner of the table editing page. In the space of the target user group, the editing results of a plurality of users for video editing tasks are synchronously displayed.

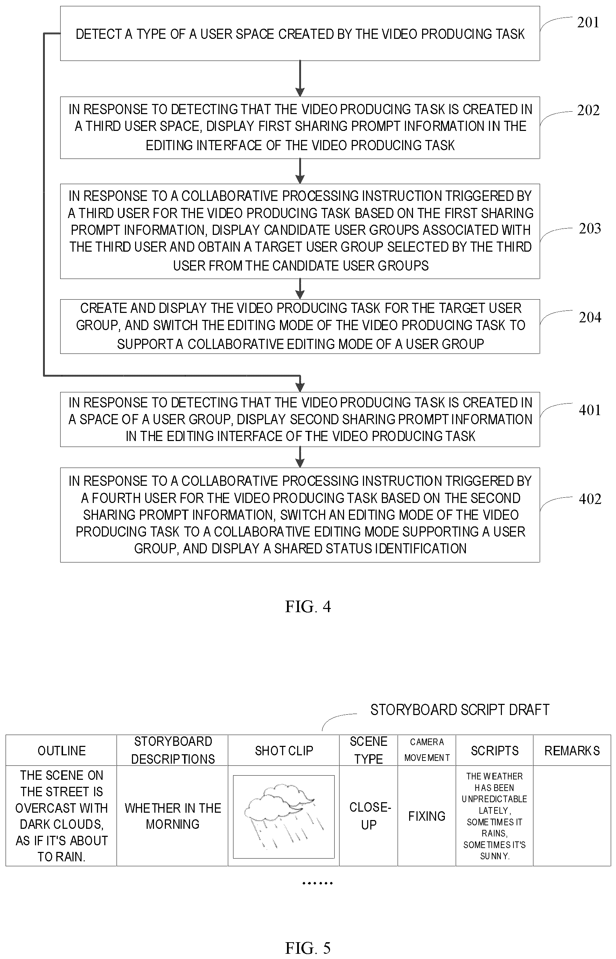

In some possible embodiments, based on the above embodiment, as shown in FIG. 4, after the above step 202, the method further includes:
Step 401, in response to detecting that the video producing task is created in a space of a user group, displaying second sharing prompt information in the editing interface of the video producing task.

In this embodiment, in response to detecting that the video producing task is created in a space of a user group, the second sharing prompt information is displayed in the editing interface of the video producing task. The style of the second shared prompt information may be one or more combinations of text, graphics, animation, etc. The space of a user group may be regarded as a public storage space visible to users the group. The video producing task edited in the user group space is visible to users in the space of the user group. The video producing task in the space of a user group may be displayed in the form of a thumbnail, and the corresponding video producing task may be initiated by triggering the corresponding thumbnail.

Step 402, in response to a collaborative processing instruction triggered by a fourth user for the video producing task based on the second sharing prompt information, switching an editing mode of the video producing task to a collaborative editing mode supporting a user group, and displaying a shared status identification.

After obtaining, from the user group, a collaborative processing instruction for the video producing task by the fourth user according to the second shared prompt information (the collaborative processing instruction is obtained in response to detecting that the fourth user triggers a preset collaborative processing control, etc.), the editing mode of the video producing task is switched to the collaborative editing mode that supports the user group, and the shared status identifier is displayed. All users in the user group including the fourth user may perform collaboratively editing on the video producing task, and the style of the shared status identifier may be set according to requirements of the scenario, which is not detailed here.

In some possible embodiments, before displaying the first shared prompt information, or before displaying the second shared prompt information, the current editing content of video producing task is obtained. In response to detecting that the current edited content meets a preset sharing condition, sharing prompt information is generated corresponding to a user space type which is currently displayed. That is, in this embodiment, the display of the corresponding shared prompt information may be actively triggered, so as to further improve the efficiency of video producing.

In different application scenarios, the preset sharing conditions are different. In some possible embodiments, the editing amount of the current editing content may be detected. When the editing amount reaches the preset amount threshold, a preset sharing condition may be considered as being satisfied. For example, if it is detected that the storyboard video material uploaded in the storyboard video material is greater than 2, the preset sharing condition is considered as being satisfied. In some possible embodiments, the task object type of the video producing task may be identified according to the current editing content. If the task object type belongs to preset shared task object types, a preset sharing condition may be considered to be satisfied. For example, whether a material object corresponding to the currently uploaded storyboard video material is of the preset material object type is detected. If so, a preset sharing condition may be considered to be satisfied.

Of course, in some possible embodiments, shared prompt information may be always displayed, i.e., the corresponding shared prompt information is always displayed in any style in the current editing interface of the current video producing task, so that the user may always perform the corresponding shared confirmation operation based on the shared prompt information.

In summary, in the video producing method according to embodiments of the present disclosure , no matter whether the user space type created by the video producing task is a third user space or a user group space, the video producing task may be switched to a collaborative editing mode that supports the group, to achieve the video producing task created for the user group. As such, a video producing task may be edited by a plurality of users in the user group collaboratively, which improves the editing efficiency of the video producing task.

The following specific embodiments illustrate operation contents, when video producing tasks include different tasks, corresponding to the collaborative editing operations of the video producing task.

In one embodiment of the present disclosure, in the case that the video producing task includes a storyboard collection task for collecting a storyboard video material, the producing result of storyboard collection task in this embodiment is obtaining storyboard script drafts. The storyboard script drafts include shooting indication information for recording at least one storyboard shot and a storyboard video material, and shooting indication information is used for indicating a feature of a shooting mode and/or a feature of a shooting content of the storyboard video material.

The shooting indication information is used for indicating the feature of a shooting mode and/or the feature of a shooting content of the storyboard video material. The feature of the shooting mode is used to indicate which shooting mode is used to shoot the storyboard video material, and the feature of the shooting content is used to indicate the specific content of shooting the storyboard video material. A storyboard script draft may be considered as a "script" for recording the shooting indication information and the storyboard video material of at least one storyboard shot. The storyboard video material corresponding to each storyboard shot of the video and the shooting indication information corresponding to each storyboard shot can be found in the storyboard script draft.

For example, as shown in FIG. 5, for the video regarding "weather record of location A", the storyboard script draft may include a storyboard shot 1 "morning weather", and the corresponding shooting indication information includes shooting content features such as scripts, outline, storyboard descriptions, and remarks, as well as shooting mode features such as scene type of "close-up" and camera movement of "fixing". The storyboard video material is a video clip obtained based on the above shooting indication information.

In some possible embodiments, in order to further improve the efficiency of collecting storyboard video material, the second device and the first device may collaboratively operate together. The second device may be a portable mobile terminal such as a smart phone, and the second device may be more flexible because it is relatively light. The first device may be a device with a larger-size screen and a more professional capability. The video editing processing, such as editing the shooting instruction information, performed at the first device, causes the video editing process to be smoother and support more editing functions. Therefore, the efficiency of video editing is improved.

In the embodiment of the present disclosure, a complete video may be split into a plurality of storyboard shots, each storyboard shot may be understood as a storyboard video material. As mentioned above, the second device is more portable and flexible, therefore, a storyboard video material of at least one storyboard shot is shot by the second device based on the shooting indication information of the storyboard video material and saved in the storyboard script draft (wherein there may be one or more second devices, and the obtained storyboard video material may be saved in the storyboard script draft by a second device by triggering a preset "save control", etc.).

In embodiments of the present disclosure, the first editing operation and the second editing operation in the above-mentioned collaborative editing operation may include performing at least one editing operation including adding, deleting and modifying storyboard shots and their related information on the editing interface storyboard collection task. The related information includes the above shooting indication information and the storyboard video material.

For example, if the storyboard script draft is displayed in the form of a table editing page, the first editing operation and the second editing operation may include editing and deleting content in any table cell in the table editing page, as well as adding and deleting rows and columns of the table.

The first editing operation and the second editing operation in the collaborative editing operation mentioned above may also include: uploading corresponding storyboard video materials for the storyboard shots, the storyboard script draft recording the order of the respective storyboard shots and their storyboard video materials for importing the storyboard video materials into a video track of the video editing interface according to the order of the storyboard shots.

The video editing interface may include not only a video track, but also any further track such as a line editing track, an audio track, a special effect track, and so on. The order of importing content information on other tracks is also the same as that of the storyboard script draft, which will not be detailed one by one here.

In the present embodiment, the video editing interface includes a video track, for example. Each video segment included in the video editing interface corresponds to a storyboard video material, storyboard video materials form the corresponding video in the order of the storyboard script drafts.

For example, a storyboard script draft is displayed in the form of a table, and the table editing page includes: shooting indication information corresponding to at least one storyboard shot: a storyboard description field name (for indicating the current storyboard shooting theme, etc.), a shooting video field name (for describing the current storyboard shot, such as "shot clip", etc.), and a shooting mode field name, where the shooting mode field name includes: a scene field name (such as distant shot, close shot, close-up, medium shot, customized, etc.), and/or camera movement field name (such as fixed, roll, pitch, lateral shift, lift, follow, surround).

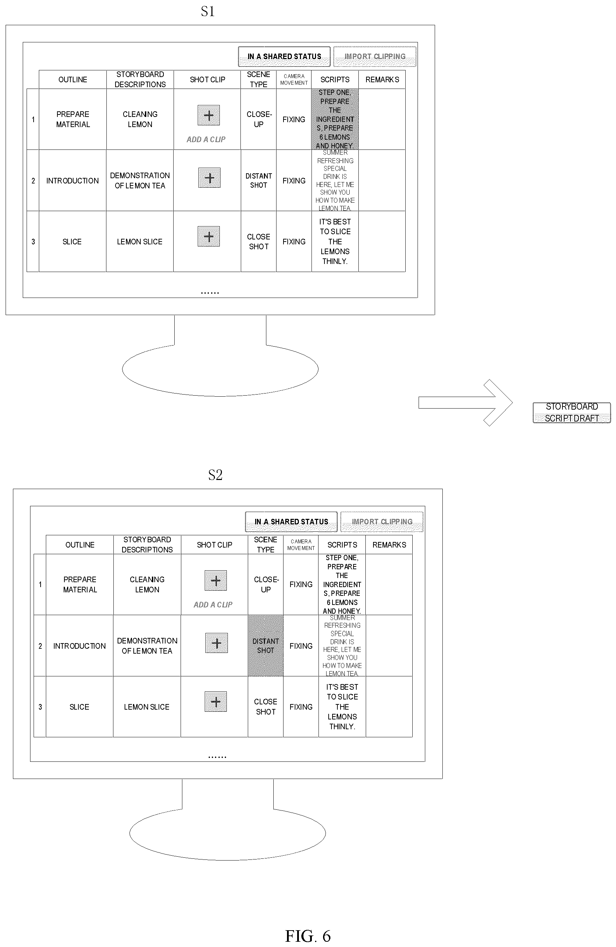

As shown in FIG. 6, for the video of "Lemon Tea Making", the video of "Lemon Tea Making" contains at least three storyboard shots, which are displayed in the form of a table editing page. The storyboard description field name corresponding to the shooting indication information contained in the table editing page is "Shot Field", the shooting video field name includes "Cleaning Lemon", etc., and the shooting mode field includes scene type and camera movement. When the first user A edits the script copy corresponding to storyboard shot 1 on device S1 (the editing status is identified by marking in gray as shown), user B may edit the shooting scene field name corresponding to storyboard shot 2 on device S2 (the editing status is identified by marking in gray as shown), and finally a storyboard script draft is created based on the editing results of A and B. The storyboard script draft reflects the editing results of A and B, thereby improving the editing efficiency of the storyboard script draft.

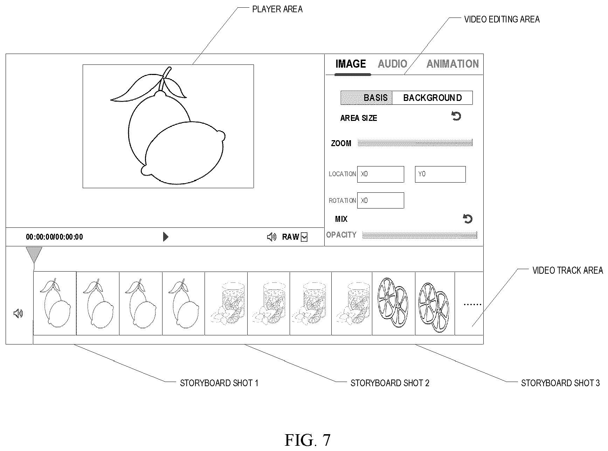

As shown in FIG. 7, these three storyboard shots may be imported into the video track of the video editing interface in sequence to create a corresponding video.

In one embodiment of the present disclosure, when the video producing task includes a video editing task for editing storyboard video material into a target video, the production result of the video editing task is to generate a target video. The first editing operation and the second editing operation include various editing operations on the material object on the editing track of the video editing task editing interface, whereby the material object includes any material in the video track, including a storyboard video material, a line copywriting material, an audio material, etc., and whereby the video track clips formed based on storyboard video material are placed on the video track in the editing tracks in the order of storyboard shots.

Typically, the editing of storyboard video material into a target video editing task may be performed on the first device. Since the operation screen of the first device is large, and due to the collaborative editing in the embodiment of the present disclosure, a plurality of users may edit corresponding material objects at a plurality of first devices, to further improve the efficiency of video editing tasks.

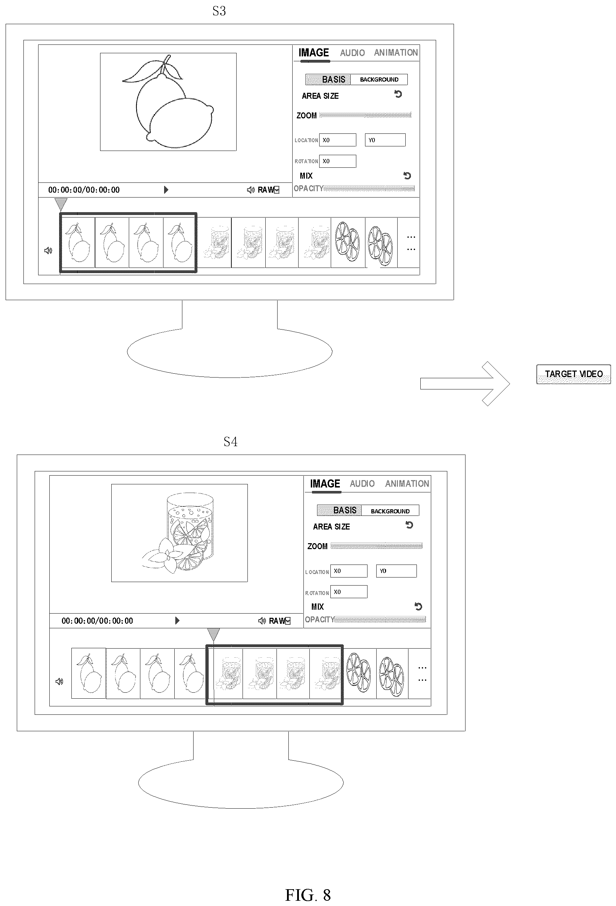

For example, as shown in FIG. 8, continuing to take the scenario shown in FIG. 7 as an example, when the video editing interface of the video editing task includes a video editing track, and the video editing track contains storyboard video materials corresponding to three storyboard shots, the video editing interface may include a video track area, a player area, and a video editing area. The player area is used to display the current video in order to intuitively obtain the effect of video editing. The video editing area is used to display various editing function controls for the video. Based on the triggering operation of the editing control in the video editing area, editing of video track clips in the video may be implemented. In this embodiment, while the first user C edits the storyboard video material corresponding to the storyboard shot 1 on the device S3 (the editing status is identified by a box as shown), the user D may edit the storyboard video material corresponding to the storyboard shot 2 on the device S (the editing status is identified by a box as shown). Finally, a target video is generated based on the editing results of C and D, which improves the editing efficiency of the target video.

In summary, in the video producing method according to embodiments of the present disclosure, users may collaboratively collect storyboard video materials and/or edit storyboard video materials into a target video, which improves efficiency of collaboratively collecting storyboard video materials and/or editing storyboard video materials into a target video.

To achieve the above embodiments, the present disclosure also proposes an apparatus for producing video.

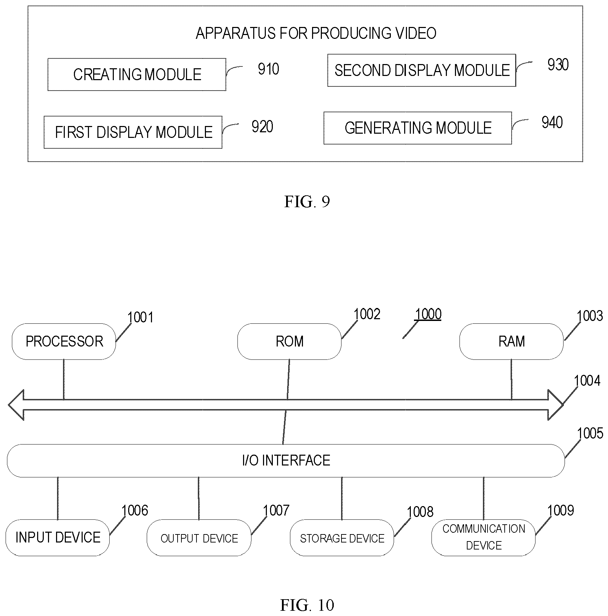

FIG. 9 is a schematic structural diagram of an apparatus for producing video provided in embodiments of the present disclosure, which may be implemented in software and/or hardware and may generally be integrated into an electronic device for producing video. As shown in FIG. 9, the apparatus includes: a creating module 910, a first display module 920, a second display module 930, and a generating module 940.

The creating module 910 is configured for creating a video producing task for a user group including at least a first user and a second user, the video producing task for collecting a storyboard video material and/or editing the storyboard video material into a target video.

The first display module 920 is configured for in response to a first editing operation of the first user for the video producing task, displaying an editing result of the first editing operation on an editing interface of the video producing task, and recording the first editing operation in the video producing task.

The second display module 930 is configured for in the case that there is no conflict between the editing operation of the first user and the editing operation of the second user, in response to the second editing operation of a second user for the video producing task, displaying an editing result of the second editing operation on the editing interface of the video producing task, and recording the second editing operation in the video producing task.

The generating module 940 is configured for generating a production result of the video producing task based on editing operations recorded in the video producing task .

The apparatus for producing video provided by embodiments of the present disclosure may implement the method for producing video provided by any embodiment of the present disclosure, include corresponding functional modules for implementing the method and have beneficial effects, which are similar in principle and not detailed herein.

In summary, according to embodiments of the present disclosure, the apparatus for producing video creates a video producing task for a user group comprising at least a first user and a second user, the video producing task being used for collecting a storyboard video material and/or editing the storyboard video material into a target video; in response to a first editing operation of the first user for the video producing task, displays an editing result of the first editing operation on an editing interface of the video producing task and records the first editing operation in the video producing task; in the case that there is no conflict between the editing operation of the first user and the editing operation of the second user, in response to the second editing operation of a second user for the video producing task, displays an editing result of the second editing operation on the editing interface of the video producing task, and records the second editing operation in the video producing task; and generates production result of the video producing task based on editing operations recorded in the video producing task. In embodiments of the present disclosure, a plurality of users collaboratively produce the video, which improves the efficiency of video producing.

To implement the above embodiments, the present disclosure also provides a computer program product comprising a computer program/instructions. The computer program/instructions, when executed by a processor, implement the method for producing video according to the above embodiments.

FIG. 10 is a schematic structural diagram of an electronic device provided by embodiments of the present disclosure.

Referring specifically to FIG. 10 below, which shows a schematic structural diagram of an electronic device 1000 suitable for implementing embodiments of the present disclosure. The electronic device 1000 in embodiments of the present disclosure may include but is not limited to mobile terminals such as mobile phones, laptops, digital broadcast receivers, PDAs (personal digital assistants), PADs (tablets), PMPs (portable multimedia players), car terminals (such as car navigation terminals), and fixed terminals such as digital TVs, desktop computers, etc. The electronic device shown in FIG. 10 is only an example and should not bring any limitations on the functionality and scope of use of embodiments of the present disclosure.

As shown in FIG. 10, the electronic device 1000 may include a processor (such as a Central Processor, graphics processing unit, etc.) 1001, which may perform various appropriate actions and processes based on programs stored in Read Only Memory (ROM) 1002 or programs loaded from storage device 1008 into Random Access Memory (RAM) 1003. In RAM 1003, various programs and data required for the operation of the electronic device 1000 are also stored. The processor 1001, ROM 1002, and RAM 1003 are connected to each other through a bus 1004. The input/output (I/O) interface 1005 is also connected to the bus 1004.

Typically, the following devices may be connected to the I/O interface 1005, including but not limited to, an input device 1006 such as touch screens, touchpads, keyboards, mice, cameras, microphones, accelerometers, gyroscopes, etc.; an output device 1007 including, for example, liquid crystal displays (LCDs), speakers, vibrators, etc.; a storage device 1008 including magnetic tapes, hard disks, etc.; and a communication device 1009. The communication device 1009 may allow electronic device 1000 to communicate via wire or wirelessly with other apparatuses to exchange data. Although FIG. 10 shows an electronic device 1000 with various apparatuses, it should be understood that it is not required to implement or have all of the devices shown. More or fewer devices may be implemented or provided instead.

In particular, according to the embodiments of the present disclosure, the process described above with reference to the flowchart may be implemented as a computer software program. For example, the embodiments of the present disclosure include a computer program product that includes a computer program carried on a computer-readable medium, the computer program containing program code for performing the method shown in the flowchart. In such embodiments, the computer program may be downloaded and installed from the network through the communication device 1009, or from the storage device 1008, or from the ROM 1002. When the computer program is executed by the processor 1001, the above functions defined in the methods of the present disclosure are performed. The embodiments of the present disclosure include a computer program that implements the above functions defined in the methods of the present disclosure when executed by a processor.

It should be noted that the computer-readable medium described above in this disclosure may be a computer-readable signal medium or a computer-readable storage medium or any combination thereof. The computer-readable storage medium may be, for example, but not limited to, an electrical, magnetic, optical, electromagnetic, infrared, or semiconductor system, device, or any combination thereof. More specific examples of computer-readable storage media may include but are not limited to: an electrical connection with one or more wires, a portable computer disk, a hard disk, a random access memory (RAM), a read-only memory (ROM), an erasable programmable read-only memory (Electrical Programmable ROM, EPROM, or flash memory), an optical fiber, a portable compact disk read-only memory (CD-ROM), an optical storage device, a magnetic storage device, or any suitable combination thereof. In this disclosure, a computer-readable storage medium may be any tangible medium containing or storing a program that may be used by or in conjunction with an instruction execution system, apparatus, or device. In this disclosure, computer-readable signal media may include data signals propagated in baseband or as part of a carrier wave, which carry computer-readable program code. Such propagated data signals may take many forms, including but not limited to electromagnetic signals, optical signals, or any suitable combination thereof. Computer-readable signal media may also be any computer-readable medium other than computer-readable storage media, which may send, propagate, or transmit programs for use by or in combination with instruction execution systems, devices, or devices. The program code contained on the computer-readable medium may be transmitted using any suitable medium, including but not limited to: wires, optical cables, radio frequency (RF), etc., or any suitable combination thereof.

In some embodiments, the client and server may communicate using any currently known or future developed network protocol such as HTTP (HyperText Transfer Protocol), and may be interconnected with any form or medium of digital data communication (e.g., a communication network). Examples of communication networks include local area networks ("LANs"), wide area networks ("WANs"), the Internet (e.g., the Internet), and end-to-end networks (e.g., ad hoc end-to-end networks), as well as any currently known or future developed networks.

The computer-readable medium may be included in the electronic device, or it may exist alone without being assembled into the electronic device.

The computer-readable medium carries one or more programs. The one or more programs, when executed by the electronic device, cause the electronic device to create a video producing task for a user group comprising at least a first user and a second user, the video producing task being used for collecting a storyboard video material and/or editing the storyboard video material into a target video; in response to a first editing operation of the first user for the video producing task, display an editing result of the first editing operation on an editing interface of the video producing task and record the first editing operation in the video producing task; in the case that there is no conflict between the editing operation of the first user and the editing operation of the second user, in response to the second editing operation of a second user for the video producing task, display an editing result of the second editing operation on the editing interface of the video producing task, and record the second editing operation in the video producing task; and generate a production result of the video producing task based on editing operations recorded in the video producing task. In embodiments of the present disclosure, a plurality of users collaboratively produce the video, which improves the efficiency of video producing.

Computer program code for performing the operations of the present disclosure may be written in one or more programming languages, or combinations thereof, including Object Oriented programming languages such as Java, Smalltalk, C++, as well as conventional procedural programming languages such as "C" or similar programming languages. The program code may be executed entirely on the user's computer, partially on the user's computer, as a standalone software package, partially on the user's computer, partially on the remote computer, or entirely on the remote computer or server. In the case of a remote computer, the remote computer may be connected to the user's computer via any type of network, including a local area network (LAN) or a wide area network (WAN), or may be connected to an external computer (e.g., via the Internet using an Internet service provider).

The flowcharts and block diagrams in the accompanying drawings illustrate the architecture, functions, and operations of the system, method, and computer program product that may be implemented in accordance with various embodiments of the present disclosure. In this regard, each block in the flowcharts or block diagrams may represent a module, program segment, or portion of code that contains one or more executable instructions for implementing a specified logical function. It should also be noted that in some alternative implementations, the functions marked in the blocks may also occur in a different order than those marked in the drawings. For example, two consecutive blocks may actually be executed substantially in parallel, and they may sometimes be executed in a reverse order, depending on the function involved. It should also be noted that each block in the block diagrams and/or flowcharts, as well as combinations of blocks in the block diagrams and/or flowcharts, may be implemented using a dedicated hardware-based system that performs the specified function or operation, or may be implemented using a combination of dedicated hardware and computer instructions.

The units described in embodiments of the present disclosures may be implemented by means of software or by means of hardware, whereby the name of the unit does not constitute a limitation on the unit itself under certain circumstances.

The functions described above herein may be performed at least in part by one or more hardware logic components. For example, without limitation, exemplary types of hardware logic components that may be used include: field programmable gate arrays (FPGAs), application specific integrated circuits (ASICs), application specific standard products (ASSPs), system-on-chip (SOCs), complex programmable logic devices (CPLDs), and the like.

In the context of this disclosure, machine-readable media may be tangible media that may contain or store programs for use by or in conjunction with instruction execution systems, devices, or devices. Machine-readable media may be machine-readable signal media or machine-readable storage media. Machine-readable media may include, but are not limited to, electronic, magnetic, optical, electromagnetic, infrared, or semiconductor systems, devices, or devices, or any suitable combination thereof. More specific examples of machine-readable storage media may include electrical connections based on one or more wires, portable computer disks, hard disks, random access memory (RAM), read-only memory (ROM), erasable programmable read-only memory (EPROM or flash memory), optical fibers, portable compact disk read-only memory (CD-ROM), optical storage devices, magnetic storage devices, or any suitable combination thereof.

The above description is only the best embodiment of the present disclosure and an explanation of the technical principles used. Those skilled in the art should understand that the scope of the disclosure involved in this disclosure is not limited to technical solutions composed of specific combinations of the above technical features, but should also cover other technical solutions formed by arbitrary combinations of the above technical features or their equivalent features without departing from the above disclosure concept. For example, technical solutions formed by replacing the above features with (but not limited to) technical features with similar functions disclosed in this disclosure.

In addition, although various operations are depicted in a specific order, this should not be understood as requiring these operations to be performed in the specific order shown or in a sequential order. In certain environments, multitasking and parallel processing may be advantageous. Similarly, although several specific implementation details are included in the above discussion, these should not be construed as limiting the scope of the present disclosure. Certain features described in the context of individual embodiments can also be implemented in combination in a single embodiment. Conversely, various features described in the context of a single embodiment can also be implemented separately or in any suitable subcombination in multiple embodiments.

Although the subject matter has been described in language specific to structural features and/or methodological logical actions, it should be understood that the subject matter defined in the appended claims is not necessarily limited to the specific features or actions described above. On the contrary, the specific features and actions described above are merely example forms of implementing the claims.

## Claims

1. A method for producing video, comprising:
creating a video producing task for a user group comprising at least a first user and a second user, the video producing task being used for collecting a storyboard video material and/or editing the storyboard video material into a target video;
in response to a first editing operation of the first user for the video producing task, displaying an editing result of the first editing operation on an editing interface of the video producing task, and recording the first editing operation in the video producing task;
in the case that there is no conflict between the editing operation of the first user and the editing operation of the second user, in response to the second editing operation of a second user for the video producing task, displaying an editing result of the second editing operation on the editing interface of the video producing task, and recording the second editing operation in the video producing task; and
generating a production result of the video producing task based on editing operations recorded in the video producing task.

2. The method of claim 1, wherein the video producing task comprises a storyboard collecting task for collecting the storyboard video material,
wherein a production result of the storyboard collection task is obtaining a storyboard script draft, the storyboard script draft comprises shooting indication information for recording at least one storyboard shot and a storyboard video material, the shooting indication information being used to indicate a feature of a shooting mode and/or a feature of a shooting content of the storyboard video material, and
the first editing operation and the second editing operation comprise at least one of the following editing operations: adding, deleting, and modifying storyboard shot and their related information on the editing interface of the storyboard collection task, and/or uploading corresponding storyboard video materials for the storyboard shots, the storyboard script draft recording the order of the respective storyboard shots and their storyboard video materials for importing the storyboard video materials into a video track of the video editing interface according to the order of the storyboard shots.

3. The method of claim 1 or 2, wherein the video producing task comprises a video editing task for editing the storyboard video material into a target video, wherein,
the production result of the video editing task is to generate a target video, and the first editing operation and the second editing operation comprise an editing operation on a material object on editing tracks of the editing interface of the video editing task, wherein video track segments formed from the storyboard video material is placed on a video track in the editing tracks in the order of the storyboard shots.

4. The method of claim 1, wherein an editing permission of the video producing task is only allowed to be occupied by a single user exclusively at a time, and the first editing operation is performed in the case where the first user is granted the editing permission of the video producing task, and the second editing operation is performed in the case where the second user is granted the editing permission of the video producing task, and the editing permission of the second user is granted after the editing permission of the first user is released.

5. The method of claim 1, wherein,
the editing permission of the video producing task is allowed to be occupied by a plurality of users at the same time, and the first editing operation and the second editing operation are performed in parallel when the first user and the second user are simultaneously granted the editing permission of the video producing task;
the first editing operation is used for triggering an editing processing of a first material object in the video producing task; during the performing of the first editing operation, an editing state of the first material object is set to a locked state, so that the first material object cannot be triggered by a further operation other than the first editing operation; and
the second editing operation is used for triggering an editing processing of a second material object in the video producing task; during the performing of the second editing operation, an editing state of the second material object is set to a locked state, so that the second material object cannot be triggered by a further operation other than the second editing operation.

6. The method of claim 1, wherein the creating a video producing task for a user group comprises:
detecting a type of a user space created by the video producing task;
in response to detecting that the video producing task is created in a third user space, displaying first sharing prompt information in the editing interface of the video producing task;
in response to a collaborative processing instruction triggered by a third user for the video producing task based on the first sharing prompt information, displaying candidate user groups associated with the third user and obtaining a target user group selected by the third user from the candidate user groups; and
creating and displaying the video producing task for the target user group, and switching the editing mode of the video producing task to support a collaborative editing mode of a user group.

7. The method of claim 6, further comprising:
displaying task sharing completion information to the third user, and displaying a group entrance corresponding to the target user group; and
in response to a triggering operation of the third user for the group entrance, switching display of a personal user space to display of a space of the target user group, wherein the video producing task is displayed in the space of the target user group, and wherein the video producing task displays a shared status identification.

8. The method of claim 6, further comprising:
in response to detecting that the video producing task is created in a space of a user group, displaying second sharing prompt information in the editing interface of the video producing task; and
in response to a collaborative processing instruction triggered by a fourth user for the video producing task based on the second sharing prompt information, switching an editing mode of the video producing task to a collaborative editing mode supporting a user group, and displaying a shared status identification.

9. The method of claim 8, wherein, before displaying the first shared prompt information or displaying the second shared prompt information, the method further comprises:
obtaining a current editing content of the video producing task; and
in response to detecting that the current edited content meets a preset sharing condition, generating sharing prompt information corresponding to a user space type which is currently displayed.

10. An apparatus for producing video, comprising:
a creating module configured for creating a video producing task for a user group including at least a first user and a second user, the video producing task for collecting a storyboard video material and/or editing the storyboard video material into a target video;
a first display module configured for in response to a first editing operation of the first user for the video producing task, displaying an editing result of the first editing operation on an editing interface of the video producing task, and recording the first editing operation in the video producing task;
a second display module configured for in the case that there is no conflict between the editing operation of the first user and the editing operation of the second user, in response to the second editing operation of a second user for the video producing task, displaying an editing result of the second editing operation on the editing interface of the video producing task, and recording the second editing operation in the video producing task; and
a generating module configured for generating a production result of the video producing task based on editing operations recorded in the video producing task.

11. An electronic device, comprising:
a processor; and
a memory for storing processor-executable instructions;
the processor being configured to read the executable instructions from the memory, and execute the executable instructions to implement the method for producing video according to any of claims 1-9.

12. A computer-readable storage medium having a computer program stored thereon, the computer program being used to perform the method for producing video according to any of claims 1-9.

13. A computer program product which, when instructions in the computer program product are executed by a processor, implements the method for producing video according to any of claims 1-9.
